# EUROPÄISCHE PATENTSCHRIFT

(11) **EP 4 341 585 B1**
(45) Veröffentlichungstag und Bekanntmachung des Hinweises auf die Patenterteilung: **11.06.2025**
(21) Anmeldenummer: 22723547.0
(22) Anmeldetag: 25.04.2022
(51) Int. Cl.: F16H 57/029, F16H 57/031, F16H 57/02

(54) **GETRIEBEMOTOR MIT EINEM EIN GETRIEBE ANTREIBENDEN ELEKTROMOTOR**
GEAR MOTOR COMPRISING AN ELECTRIC MOTOR DRIVING A TRANSMISSION
MOTORÉDUCTEUR COMPORTANT UN MOTEUR ÉLECTRIQUE ENTRAÎNANT UNE TRANSMISSION

(30) Priorität: 18.05.2021 CN 202110539507; 14.07.2021 DE 102021003627
(43) Veröffentlichungstag der Anmeldung: 27.03.2024
(73) Patentinhaber: SEW-EURODRIVE GmbH & Co. KG, 76646 Bruchsal (DE)
(72) Erfinder: QIONGHUA, Gao, Tianjin (CN)
(86) Internationale Anmeldenummer: PCT/EP2022/025175
(87) Internationale Veröffentlichungsnummer: WO 2022/242900

(56) Entgegenhaltungen:
- EP-A1- 3 250 844
- WO-A1-2013/146260
- CN-U- 207 111 896
- DD-A1- 30 895
- DE-A1- 2 830 191

## Beschreibung

Die Erfindung betrifft ein Getriebemotor mit einem ein Getriebe antreibenden Elektromotor.

Es ist allgemein bekannt, dass ein Getriebemotor mit einem ein Getriebe antreibenden Elektromotor ausbildbar ist.

Aus der WO 2013 / 146 260 A1 ist ein Getriebemotor bekannt.

Aus der DE 28 30 191 A1 ist eine Vorrichtung zur Abdichtung des Spaltes zwischen relativ zueinander verdrehbaren Teilen bekannt.

**Aus der** WO 2016/119802 A1 **ist als nächstliegender Stand der Technik eine Dichtungsanordnung für ein Getriebe bekannt.**

**Aus der** DD 30 895 **ist eine Wellendichtung bekannt.**

**Aus der** CN 207111896 U **ist eine Lageranordnung bekannt.**

**Aus der** DE 28 30 191 A1 **ist eine Vorrichtung zur Abdichtung des Spaltes zwischen relativ zueinander verdrehbaren Teilen bekannt.**

Der Erfindung liegt daher die Aufgabe zugrunde, die Betriebssicherheit und auch Standzeit eines Getriebemotors weiterzubilden.

Erfindungsgemäß wird die Aufgabe bei dem Elektromotor nach den in Anspruch 1 angegebenen Merkmalen gelöst.

Wichtige Merkmale der Erfindung bei dem Getriebemotor mit einem ein Getriebe antreibenden Elektromotor sind, dass ein Lagerflansch des Getriebes an einem Gehäuseteil des Getriebes befestigt ist,
wobei im Lagerflansch ein Lager zur drehbaren Lagerung der abtreibenden Welle des Getriebes aufgenommen ist,
wobei im Lagerflansch ein Wellendichtring aufgenommen ist, welcher zur Welle hin abdichtet, insbesondere Dichtfunktion ausführt,
wobei eine Deckscheibe auf der vom insbesondere mit Schmieröl befüllten Innenraum des Getriebes abgewandten Seite des Lagerflansches am Lagerflansch befestigt ist, insbesondere mittels Schrauben,
wobei die Deckscheibe an ihrer dem Lagerflansch zugewandten Seite in Umfangsrichtung umlaufende Nuten aufweist,
wobei in der Deckscheibe eine Radialbohrung ausgeführt ist, welche in eine der Nuten, insbesondere in die radial äußerste der Nuten mündet.

Von Vorteil ist dabei, dass die Betriebssicherheit und Standzeit des Getriebemotors vergrößert ist. Denn durch die Fettschmierung zusammen mit der Deckscheibe ist einerseits die Standzeit des Wellendichtrings verbessert und andererseits das Eindringen von Staub oder Schmutz verhindert, wodurch die Betriebssicherheit und auch die Standzeit erhöht sind.

Die Deckscheibe ist dabei einfach herstellbar und installierbar. Wichtig ist dabei auch, dass die Befüllung mit Fett über eine Rohrleitung ausgeführt wird und somit aus großer Entfernung zum Getriebe ermöglicht ist. Auf diese Weise ist auch ein Mindestabstand einhaltbar und somit Berührung von drehenden Teilen und die damit einhergehende Unfallgefahr vermeidbar.

Bei einer vorteilhaften Ausgestaltung ist eine Rohrleitung mit der Deckscheibe verbunden. Von Vorteil ist dabei, dass keine Änderungen am Getriebe notwendig sind sondern die Deckscheibe nachträglich anbringbar ist und somit die Fettschmierung samt Deckscheibe nachträglich bei einer schon bestehenden Anlage hinzufügbar ist.

Bei einer vorteilhaften Ausgestaltung ist zwischen Deckscheibe und Welle ein Spalt, insbesondere ein Ringspalt, ausgebildet. Fettüberdruck und/oder überschüssiges Fett über den Spalt abführbar ist. Somit ist auch ein Herausdrücken von Schmutz ermöglicht.

Wichtige Merkmale bei dem Getriebemotor mit einem ein Getriebe antreibenden Elektromotor nach Anspruch 4 sind, dass ein Lagerflansch des Getriebes an einem Gehäuseteil des Getriebes befestigt ist,
wobei im Lagerflansch ein Lager zur drehbaren Lagerung der abtreibenden Welle des Getriebes aufgenommen ist,
wobei im Lagerflansch ein Wellendichtring aufgenommen ist, welcher zur Welle hin abdichtet, insbesondere Dichtfunktion ausführt,
wobei eine Deckscheibe auf der vom insbesondere mit Schmieröl befüllten Innenraum des Getriebes abgewandten Seite des Lagerflansches am Lagerflansch angeordnet ist und mit der Welle drehfest verbunden ist,
insbesondere wobei die Deckscheibe auf die abtreibende Welle aufgesteckt ist und drehfest mit der Welle verbunden ist,
wobei die Deckscheibe an ihrer dem Lagerflansch zugewandten Seite in Umfangsrichtung umlaufende Nuten aufweist,
wobei in der Deckscheibe eine Radialbohrung ausgeführt ist, welche in eine der Nuten, insbesondere in die radial äußerste der Nuten mündet.

Von Vorteil ist dabei, dass die Betriebssicherheit und Standzeit des Getriebemotors vergrößert ist. Denn durch die Fettschmierung zusammen mit der Deckscheibe ist einerseits die Standzeit des Wellendichtrings verbessert und andererseits das Eindringen von Staub oder Schmutz verhindert, wodurch die Betriebssicherheit und auch die Standzeit erhöht sind.

Die Deckscheibe ist dabei einfach herstellbar und installierbar. Wichtig ist dabei auch, dass die Befüllung mit Fett über eine zum Lagerflansch führende Rohrleitung ausgeführt wird und somit aus großer Entfernung zum Getriebe ermöglicht ist. Auf diese Weise ist auch ein Mindestabstand einhaltbar und somit Berührung von drehenden Teilen, insbesondere auch von der Deckscheibe, und die damit einhergehende Unfallgefahr vermeidbar.

Insbesondere weist eine Rohrleitung mit dem Lagerflansch verbunden ist. Von Vorteil ist dabei, dass eine kompakte Lösung erreicht ist, denn die Schmierung durch den Lagerflansch hindurch erfordert keinen zusätzlichen Bauraum.

Insbesondere ist die Deckscheibe mit der Welle dicht verbunden ist. Von Vorteil ist dabei, dass eine Labyrinthdichtung zwischen Lagerflansch und Deckscheibe ausbildbar ist.

Bei einer vorteilhaften Ausgestaltung eines der vorgenannten Getriebemotoren mündet die Rohrleitung in die Radialbohrung. Von Vorteil ist dabei, dass das fett von einer sicheren Position aus zuführbar ist und Unfallgefahren oder Verletzungen vermeidbar sind.

Bei einer vorteilhaften Ausgestaltung eines der vorgenannten Getriebemotoren ist ein Endbereich der Rohrleitung an einem Gehäuseteil des Elektromotors befestigt. Von Vorteil ist dabei, dass das Befüllen des Fettes im Bereich des Motors ermöglicht ist und die Rohrleitung außen am Motor geführt ist, also nicht integriert im Motor. Auf diese Weise ist die Funktion des Motors auch bei defekter Rohrleitung sicher gewährleistbar.

Bei einer vorteilhaften Ausgestaltung eines der vorgenannten Getriebemotoren ist an dem Endbereich ein Schmiernippel zum Ermöglichen eines Zuführens von Fett angeordnet. Von Vorteil ist dabei, dass ein einfaches Zuführen ermöglicht ist.

Bei einer vorteilhaften Ausgestaltung eines der vorgenannten Getriebemotoren sind die Nuten zueinander und/oder zur Drehachse der abtreibenden Welle koaxial angeordnet und ausgebildet. Von Vorteil ist dabei, dass mittels der Nuten und der vom Lagerflansch aus axial hervorstehenden Erhebungen ein Labyrinth ausbildbar ist.

Bei einer vorteilhaften Ausgestaltung eines der vorgenannten Getriebemotoren sind die Nuten in Umfangsrichtung ununterbrochen sind und/oder vollständig umlaufend ausgeführt. Von Vorteil ist dabei, dass eine effiziente Fettversorgung und ein großes Speichervolumen bereitstellbar ist.

Bei einer vorteilhaften Ausgestaltung eines der vorgenannten Getriebemotoren sind an der der Deckscheibe zugewandten Seite des Lagerflansches in Umfangsrichtung sich erstreckende Erhebungen ausgeformt, welche in die Nuten hineinragen, insbesondere zur Bildung einer Labyrinthdichtung. Von Vorteil ist dabei, dass ein Labyrinth in einfacher Weise ausbildbar ist und somit eine hohe Dichtheit und ein großes Speichervolumen bereitstellbar ist.

Bei einer vorteilhaften Ausgestaltung eines der vorgenannten Getriebemotoren weist die Deckscheibe eine Ausnehmung, insbesondere ein Rundloch, auf, durch welche die abtreibende Welle hindurchragt. Von Vorteil ist dabei, dass eine einfache Montage ausführbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

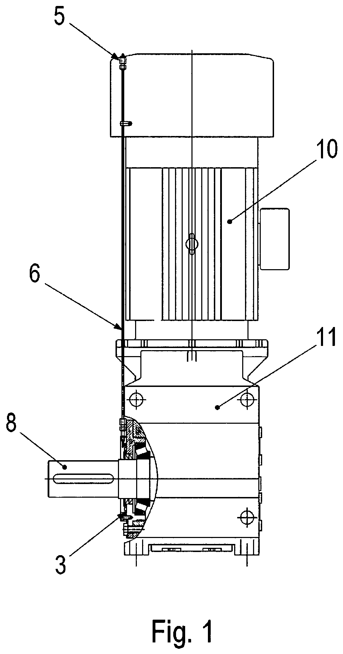

In der Figur 1 ist ein erfindungsgemäßer Getriebemotor mit angeschnittenem Abtriebsbereich in Seitenansicht dargestellt.

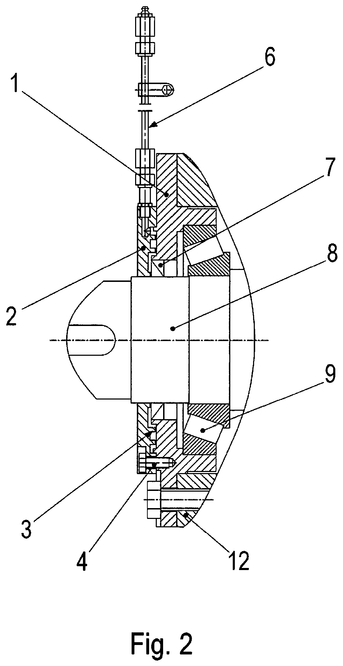

In der Figur 2 ist der Abtriebsbereich vergrößert und schematisch dargestellt.

Wie in den Figuren dargestellt ist ein Getriebe 11 von einem Elektromotor 10 angetrieben und mit diesem verbunden.

Mit einem Gehäuseteil 12 des Getriebes 11 ist ein Lagerflansch 1 des Getriebes 11 verbunden. Insbesondere ist der Lagerflansch 1 mittels Schrauben am Gehäuseteil 12 befestigt.

Im Lagerflansch 1 ist ein Lager 9 aufgenommen zur drehbaren Lagerung der abtreibenden Welle 8 des Getriebes 11.

Die abtreibende Welle 8 ragt aus dem Getriebe 11 heraus.

Auf der vom Innenraum abgewandten Seite des Lagers 9 ist ein Wellendichtring 7 angeordnet. Dieser Wellendichtring 7 ist im Lagerflansch aufgenommen und dichtet zur Welle 8 hin ab. Die Dichtlippe des Wellendichtrings 7 läuft vorzugsweise auf einem dafür feinbearbeiteten Laufberiech der Welle 8.

Eine Deckscheibe 2 ist mittels Schrauben 4 am Lagerflansch 1 befestigt. Hierzu sind die Schrauben 4 in jeweilige axial gerichtete Gewindebohrungen des Lagerflansches 1 eingeschraubt, so dass die Schraubenköpfe der Schrauben 4 die Deckscheibe 2 auf den Lageflansch 1 drücken.

Das Getriebe 11 ist vorzugsweise als Winkelgetriebe ausgeführt und derart montiert, dass die Drehachse der abtreibenden Welle 8 parallel zur axialen Richtung ausgerichtet ist. Die Drehachse der Rotorwelle des Elektromotors 10 ist vorzugsweise vertikal ausgerichtet.

Die abtreibende Welle 8 ragt durch eine Ausnehmung der Deckscheibe 2 hindurch. Zwischen der Welle 8 und der Deckscheibe 2 ist nur ein geringer Spalt vorgesehen, so dass zwar keine Berührung aber auch kein wesentlicher Fettverlust auftritt.

Die dem lagerflansch 1 zugewandte Seite der Deckscheibe 2 weist koaxial zueinander angeordnete zirkulare Nuten auf. Jede der Nuten ist bezogen auf die Drehachse der abtreibenden Welle 8 in Umfangsrichtung ununterbrochen.

Weitere Vertiefungen auf der dem Lagerflansch 1 zugewandten Seite der Deckscheibe 2 verlaufen in radialer Richtung und verbinden die Nuten.

Eine Radialbohrung der Deckscheibe 2 mündet in der radial äußersten Nut.

An die Radialbohrung ist eine von außen herangeführte Rohrleitung 6 angeschlossen, durch die Fett zuführbar ist. Dabei wird das Fett an einem am von dem Lagerflansch 1 abgewandten Ende der Rohrleitung 6 angeordneten Schmiernippel 5 eingefüllt.

Dieses Ende der Rohrleitung 6 und/oder der Schmiernippel 5 ist oder sind an einem Gehäuseteil des Elektromotors 10 befestigt, insbesondere an einer Lüfterhaube des Elektromotors 10.

An der der Deckscheibe 2 zugewandten Seite des Lageflansches 1 sind am Lagerflansch axial hervorstehende, in Umfangsrichtung sich erstreckende Erhebungen ausgeformt, welche in die Nuten ragen. Somit ist eine mit Fett befüllte Labyrinthdichtung 3 zwischen der Deckscheibe 2 und dem Lagerflansch 1 ausgebildet. Allerdings ist die Deckscheibe 2 am Lagerflansch 1 befestigt und somit drehfest verbunden.

Mittels der Labyrinthdichtung zwischen Deckscheibe 2 und Lagerflansch 1 ist somit eine Fettschmierung und Fettversorgung des Laufbereichs der Dichtlippe des Wellendichtrings 7 erreicht. Überschüssiges Fett und/oder Abbau von Überdruck im Fett ist durch den Spalt zwischen Deckscheibe 2 und Welle 8 ermöglicht. Außerdem ist durch die Fettbefüllung des Spalts ein Eindringen von Schmutz verhinderbar.

Bei weiteren nicht beanspruchten Beispielen sind die Schrauben 4 nicht vorhanden und die Deckscheibe 2 ist drehfest mit der Welle 8 verbunden. Die Radialbohrung ist dann nicht in der Deckscheibe 2, sondern im Lagerflansch 1 angeordnet und mündet neben den Vertiefungen, so dass die Labyrinthdichtung mit Fett versorgbar ist. dabei ist die Rohrleitung 6 dann am Lagerflansch 1, insbesondere an der Radialbohrung, angeschlossen.

### Bezugszeichenliste

1 Lagerflansch
2 Deckscheibe
3 Labyrinthdichtung
4 Schraube
5 Schmiernippel für Fettschmierung
6 Rohrleitung
7 Wellendichtring
8 Welle
9 Lager
10 Elektromotor
11 Getriebe
12 Gehäuseteil

## Patentansprüche

1. Getriebemotor mit einem ein Getriebe (11) antreibenden Elektromotor (10),
wobei ein Lagerflansch (1) des Getriebes (11) an einem Gehäuseteil (12) des Getriebes (11) befestigt ist,
wobei im Lagerflansch (1) ein Lager (9) zur drehbaren Lagerung der abtreibenden Welle (8) des Getriebes (11) aufgenommen ist,
wobei im Lagerflansch (1) ein Wellendichtring (7) aufgenommen ist, welcher zur Welle (8) hin abdichtet, insbesondere Dichtfunktion ausführt,
wobei eine Deckscheibe (2) auf der vom insbesondere mit Schmieröl befüllten Innenraum des Getriebes (11) abgewandten Seite des Lagerflansches (1) am Lagerflansch (1) befestigt ist, insbesondere mittels Schrauben (4),
**dadurch gekennzeichnet, dass**
die Deckscheibe (2) an ihrer dem Lagerflansch (1) zugewandten Seite in Umfangsrichtung umlaufende Nuten aufweist,
wobei in der Deckscheibe (2) eine Radialbohrung ausgeführt ist, welche in eine der Nuten, insbesondere in die radial äußerste der Nuten mündet.

2. Getriebemotor nach Anspruch 1,
**dadurch gekennzeichnet, dass**
eine Rohrleitung (6) mit der Deckscheibe (2) verbunden ist.

3. Getriebemotor nach einem der vorangegangenen Ansprüche,
**dadurch gekennzeichnet, dass**
zwischen Deckscheibe (2) und Welle (8) ein Spalt, insbesondere ein Ringspalt, ausgebildet ist.

4. **Getriebemotor nach einem der vorangegangenen Ansprüche,**
**dadurch gekennzeichnet, dass**
die Deckscheibe (2) auf der vom insbesondere mit Schmieröl befüllten Innenraum des Getriebes (11) abgewandten Seite des Lagerflansches (1) am Lagerflansch (1) **befestigt** ist und mit der Welle (8) drehfest verbunden ist.

5. Getriebemotor nach Anspruch 4,
**dadurch gekennzeichnet, dass**
eine Rohrleitung (6) mit dem Lagerflansch (1) verbunden ist.

6. Getriebemotor nach Anspruch 4 oder 5,
**dadurch gekennzeichnet, dass**
die Deckscheibe (2) mit der Welle (8) dicht verbunden ist.

7. Getriebemotor nach einem der vorangegangenen Ansprüche,
**dadurch gekennzeichnet, dass**
die Rohrleitung (6) in die Radialbohrung mündet.

8. Getriebemotor nach einem der vorangegangenen Ansprüche,
**dadurch gekennzeichnet, dass**
ein Endbereich der Rohrleitung (6) an einem Gehäuseteil (12) des Elektromotors (10) befestigt ist.

9. Getriebemotor nach einem der vorangegangenen Ansprüche,
**dadurch gekennzeichnet, dass**
an dem Endbereich ein Schmiernippel (5) zum Ermöglichen eines Zuführens von Fett angeordnet ist.

10. Getriebemotor nach einem der vorangegangenen Ansprüche,
**dadurch gekennzeichnet, dass**
die Nuten zueinander und/oder zur Drehachse der abtreibenden Welle (8) koaxial angeordnet und ausgebildet sind.

11. Getriebemotor nach einem der vorangegangenen Ansprüche,
**dadurch gekennzeichnet, dass**
die Nuten in Umfangsrichtung ununterbrochen sind und/oder vollständig umlaufend ausgeführt sind.

12. Getriebemotor nach einem der vorangegangenen Ansprüche,
**dadurch gekennzeichnet, dass**
an der der Deckscheibe (2) zugewandten Seite des Lagerflansches (1) in Umfangsrichtung sich erstreckende Erhebungen ausgeformt sind, welche in die Nuten hineinragen,
insbesondere zur Bildung einer Labyrinthdichtung (3).

13. Getriebemotor nach einem der vorangegangenen Ansprüche,
**dadurch gekennzeichnet, dass**
die Deckscheibe (2) eine Ausnehmung, insbesondere ein Rundloch, aufweist, durch welche die abtreibende Welle (8) hindurchragt.

## Claims

1. Gear motor comprising an electric motor (10) that drives a transmission (11),
wherein a bearing flange (1) of the transmission (11) is secured to a housing part (12) of the transmission (11),
wherein a bearing (9) for rotatably mounting the output shaft (8) of the transmission (11) is accommodated in the bearing flange (1),
wherein a shaft sealing ring (7) which seals toward the shaft, in particular performs a sealing function, is accommodated in the bearing flange (1),
wherein a cover disk (2) is secured, in particular by means of screws (4), to the bearing flange (1) on the side of the bearing flange (1) facing away from the interior of the transmission (11), the interior being in particular filled with lubricating oil,
**characterized in that**
the cover disk (2) has grooves extending in the circumferential direction on its side facing toward the bearing flange (1),
wherein a radial bore is formed in the cover disk (2), which radial bore opens into one of the grooves, in particular into the radially outermost groove.

2. Gear motor according to claim 1,
**characterized in that**
a pipe (6) is connected to the cover disk (2).

3. Gear motor according to any one of the preceding claims,
**characterized in that**
a gap, in particular an annular gap, is formed between the cover disk (2) and the shaft (8).

4. Gear motor according to any one of the preceding claims,
**characterized in that**
the cover disk (2) is secured to the bearing flange (1) on the side of the bearing flange (1) facing away from the interior of the transmission (11), the interior being in particular filled with lubricating oil, and is rotationally fixed to the shaft.

5. Gear motor according to claim 4,
**characterized in that**
a pipe (6) is connected to the bearing flange (1).

6. Gear motor according to claim 4 or 5,
**characterized in that**
the cover disk (2) is sealingly connected to the shaft (8).

7. Gear motor according to any one of the preceding claims,
**characterized in that**
the pipe (6) opens into the radial bore.

8. Gear motor according to any one of the preceding claims,
**characterized in that**
an end region of the pipe (6) is secured to a housing part (12) of the electric motor (10).

9. Gear motor according to any one of the preceding claims,
**characterized in that**
a grease nipple (5) for enabling a supply of grease is arranged at the end region.

10. Gear motor according to any one of the preceding claims,
**characterized in that**
the grooves are arranged and formed coaxially to one another and/or to the axis of rotation of the output shaft (8).

11. Gear motor according to any one of the preceding claims,
**characterized in that**
the grooves are uninterrupted in the circumferential direction and/or extend all the way around.

12. Gear motor according to any one of the preceding claims,
**characterized in that**
projections that extend in the circumferential direction are formed on the side of the bearing flange (1) facing toward the cover disk (2), which projections project into the grooves, in particular so as to form a labyrinth seal (3).

13. Gear motor according to any one of the preceding claims,
**characterized in that**
the cover disk (2) has a cutout, in particular a round hole, through which the output shaft (8) projects.

## Revendications

1. Motoréducteur comportant un moteur électrique (10) entraînant un réducteur (11),
dans lequel une bride de palier (1) du réducteur (11) est fixée à une partie de carter (12) du réducteur (11),
dans lequel un palier (9) est logé dans la bride de palier (1) pour le montage rotatif de l'arbre mené (8) du réducteur (11),
dans lequel un joint d'étanchéité d'arbre (7) est logé dans la bride de palier (1), lequel assure l'étanchéité vers l'arbre (8), en particulier une fonction d'étanchéité,
dans lequel un disque de recouvrement (2) est fixé sur la bride de palier (1) du côté de la bride de palier (1) opposé à l'espace intérieur du réducteur (11) rempli en particulier d'huile de lubrification, en particulier au moyen de vis (4),
**caractérisé en ce que**
le disque de recouvrement (2) présente des rainures périphériques sur son côté tourné vers la bride de palier (1),
dans lequel un alésage radial est réalisé dans le disque de recouvrement (2), lequel débouche dans l'une des rainures, en particulier dans la rainure la plus à l'extérieur radialement.

2. Motoréducteur selon la revendication 1,
**caractérisé en ce**
**qu'**une conduite tubulaire (6) est reliée au disque de recouvrement (2).

3. Motoréducteur selon l'une des revendications précédentes,
**caractérisé en ce**
**qu'**un interstice, en particulier un interstice annulaire, est formé entre le disque de recouvrement (2) et l'arbre (8).

4. Motoréducteur selon l'une des revendications précédentes,
**caractérisé en ce que**
le disque de recouvrement (2) est fixé sur la bride de palier (1) du côté de la bride de palier (1) opposé à l'espace intérieur du réducteur (11) rempli en particulier d'huile de lubrification et est relié à l'arbre (8) de manière solidaire en rotation.

5. Motoréducteur selon la revendication 4,
**caractérisé en ce**
**qu'**une conduite tubulaire (6) est reliée à la bride de palier (1).

6. Motoréducteur selon la revendication 4 ou 5,
**caractérisé en ce que**
le disque de recouvrement (2) est relié de manière étanche à l'arbre (8).

7. Motoréducteur selon l'une des revendications précédentes,
**caractérisé en ce que**
la conduite tubulaire (6) débouche dans l'alésage radial.

8. Motoréducteur selon l'une des revendications précédentes,
**caractérisé en ce**
**qu'**une zone d'extrémité de la conduite tubulaire (6) est fixée à une partie de carter (12) du moteur électrique (10).

9. Motoréducteur selon l'une des revendications précédentes,
**caractérisé en ce**
**qu'**un graisseur (5) est disposé sur la zone d'extrémité pour permettre une alimentation en graisse.

10. Motoréducteur selon l'une des revendications précédentes,
**caractérisé en ce que**
les rainures sont disposées et conçues de manière coaxiale les unes par rapport aux autres et/ou par rapport à l'axe de rotation de l'arbre mené (8).

11. Motoréducteur selon l'une des revendications précédentes,
**caractérisé en ce que**
les rainures sont continues dans la direction circonférentielle et/ou sont réalisées sur toute la circonférence.

12. Motoréducteur selon l'une des revendications précédentes,
**caractérisé en ce que**
des bossages s'étendant dans la direction circonférentielle sont formés sur le côté de la bride de palier (1) tourné vers le disque de recouvrement (2), lesquels font saillie dans les rainures, en particulier pour former un joint labyrinthe (3).

13. Motoréducteur selon l'une des revendications précédentes,
**caractérisé en ce que**
le disque de recouvrement (2) présente un évidement, en particulier un trou rond, à travers lequel l'arbre mené (8) fait saillie.
